# EUROPÄISCHE PATENTSCHRIFT

(11) **EP 1 125 808 B1**
(45) Veröffentlichungstag und Bekanntmachung des Hinweises auf die Patenterteilung: **17.08.2005**
(21) Anmeldenummer: 01103728.0
(22) Anmeldetag: 15.02.2001
(51) Int. Cl.: B60S 1/52

(54) **Scheinwerferreinigungsanlage für ein Kraftfahrzeug und Verfahren zu deren Montage**
Headlamp cleaning device for a vehicle and mounting method thereof
Dispositif de nettoyage de phares pour véhicule et méthode pour son montage

(30) Priorität: 19.02.2000 DE 10007758
(43) Veröffentlichungstag der Anmeldung: 22.08.2001
(73) Patentinhaber: Volkswagen Aktiengesellschaft, 38436 Wolfsburg (DE)
(72) Erfinder: Wysocki, Bernd, 38126 Braunschweig (DE)

(56) Entgegenhaltungen:
- EP-A- 0 581 672
- EP-A- 0 626 296
- DE-A- 19 811 163
- DE-A- 19 824 085
- DE-A- 19 920 470
- DE-A- 19 920 965
- FR-A- 2 674 806

## Beschreibung

Die Erfindung betrifft eine Scheinwerferreinigungsanlage für ein Kraftfahrzeug mit einer durch eine Öffnung in einer karosseriefesten Außenwandung zwischen einer Ruheposition innerhalb der Fahrzeugkarosserie und einer Betriebsposition außerhalb derselben verbringbaren Hub-Spritzdüse mit einer Abdeckkappe zum Verschließen der Öffnung bei in der Ruheposition befindlicher Hub-Spritzdüse und ein Verfahren zu deren Montage.

Die DE 43 28 570 C2 hat eine Scheinwerferreinigungsanlage mit einer durch eine Öffnung in einer karosseriefesten Außenwandung teleskopartig in eine Betriebsposition ausfahrbaren Hub-Spritzdüse zum Gegenstand, bei der am Düsenkopf eine einen abgesetzten Rand der Öffnung übergreifende Abdeckkappe angeordnet ist. Auf dem Rand der Öffnung sind Mittel zum radialen Zentrieren der Abdeckkappe vorgesehen, insbesondere mehrere über den Umfang der Öffnung verteilte, radial nach innen weisende Zentriernasen, und die Abdeckkappe selbst ist über eine am Düsenkopf gehalterte Einstelleinrichtung radial und axial einstellbar fixiert. Durch die einstellbare Fixierung der Abdeckkappe gegenüber dem Düsenkopf kann sowohl eine einwandfreie Abdeckung der Durchtrittsöffnung mit einer gleichmäßig ausgebildeten Fuge zwischen der Abdeckkappe und der Außenwandung - auch bei einer Abweichung der Bewegungsbahn des Düsenkopfes im Abstand vom Zentrum der Öffnung - als auch eine Flächenbündigkeit der Abdeckkappe mit der Außenseite der Außenwandung erreicht werden. Die Halterung der Abdeckkappe in Verbindung mit der Einstelleinrichtung ist jedoch einigermaßen aufwendig.

In der DE 198 24 085 A1 ist eine Scheinwerferreinigungsanlage für ein Kraftfahrzeug mit einer durch eine Öffnung in einer karosseriefesten Außenwandung zwischen einer Ruheposition und einer Betriebsposition verbringbaren Hub-Spritzdüse und einer an dieser angeordneten und die Öffnung in der Ruheposition verschließenden Abdeckkappe und einer um diese ausgebildeten Fuge zur Außenwandung beschrieben. In der Öffnung ist ein Zentriereinsatz angeordnet, an dem Zentrierelemente ausgebildet sind, die mit an der Abdeckkappe angeordneten Zentrierelementen zum radialen Zentrieren derselben korrespondieren, wobei diese beim Festlegen des Hubzylinders und in der Ruheposition miteinander in Eingriff stehen. Der von der Außenseite der Fahrzeugkarosserie einsetzbare Zentriereinsatz weist randseitig eine zum Zentrum der Öffnung gerichtete Zentrierschräge und/ oder Zentrieröffnungen für an der Abdeckkappe angeordnete Zentrierdorne zum Zentrieren der in der Ruheposition befindlichen Abdeckkappe auf. Beim Festlegen des Hubzylinders innerhalb der Fahrzeugkarosserie stehen diese miteinander in Eingriff. Die Abdeckkappe ist allseitig beweglich, insbesondere kardanisch, am Düsenkopf gehalten und daher aufwändig.

Es ist Aufgabe der Erfindung, eine Scheinwerferreinigungsanlage nach dem Oberbegriff des Anspruchs 1 zu schaffen, bei der der Hubzylinder an einer engen Öffnung in der Fahrzeugkarosserie von innen anordbar und dabei eine genaue Positionierung desselben und der von außen in den denselben einführbaren Hub-Spritzdüse mit der Abdeckkappe aufwandsreduziert sichergestellt ist. Es ist auch Aufgabe der Erfindung, eine kostengünstige Montage der Scheinwerferreinigungsanlage sicherzustellen.

Diese Aufgaben werden bei einer Scheinwerferreinigungsanlage nach dem Oberbegriff des Anspruchs 1 und 8 durch deren kennzeichnende Merkmale gelöst. Vorteilhafte Ausgestaltungen sind in den jeweils nachfolgenden Unteransprüchen beschrieben.

Die Erfindung besteht darin, daß bei einer Scheinwerferreinigungsanlage mit einer Hub-Spritzdüse, die durch eine Öffnung einer karosseriefesten Außenwandung zwischen einer Ruheposition und einer Betriebsposition verbringbar und die Öffnung in der Ruheposition durch eine Abdeckkappe verschlossen ist, ein Rahmen in die Öffnung mit einem zum Zentrum derselben gerichteten Anlagerand für die Abdeckkappe von hinten eingesetzt ist, der Hubzylinder für die Hub-Spritzdüse axial verschiebbar am Rahmen und ortsfest innerhalb der Fahrzeugkarosserie fixiert ist, wozu an der Innenseite des Rahmens angeordnete Arretierdorne und am Hubzylinder rahmenseitig angeordnete Halterungsarme mit Öffnungen für die Arretierdorne ausgebildet sind. Bei bekannten Einricktungen weisen die Abdeckkappe und der Anlagerand miteinander korrespondierende Zentrierelemente auf, die beim Festlegen des Hubzylinders und in der Ruheposition miteinander in Eingriff stehen. Nach dem Festlegen des Hubzylinders ist die Abdeckkappe zentriert im Rahmen angeordnet und nimmt beim Verbringen der Hub-Spritzdüse aus der Betriebsstellung in ihre Ruhestellung stets diese zentrierte Stellung wieder ein. Der Hubzylinder ist somit über die an der Abdeckkappe und die am Anlagerand angeordneten Zentrierelemente innerhalb der Fahrzeugkarosserie definiert festgelegt. Die um die Abdeckkappe ausgebildete Fuge ist gleichmäßig breit, und in dieser sind keine Zentriermittel für die Abdeckkappe angeordnet, die das optische Bild stören könnten. Die Lösung ist einfach und wenig aufwendig.

Als Zentrierelemente können wenigstens zwei in den Anlagerand eingebrachte Zentrierlöcher für zwei an der Innenseite der Abdeckkappe angeordnete und mit diesen korrespondierende Zentrierdorne dienen, die zu ihrem freien Ende zu verjüngt sind und bei ihrem Eingreifen in die Zentrierlöcher die Abdeckkappe in eine zentrierte Position am Rahmen ziehen. Vorzugsweise sind jeweils zwei Zentrierlöcher und Zentrierdorne, bezogen auf den Anlagerand, gegenüberliegend angeordnet. Dadurch, daß diese Zentrierelemente beim Festlegen des Hubzylinders miteinander in Eingriff stehen, und die Abdeckkappe dabei zentriert ist, sind die Hubachse der Hub-Spritzdüse und deren Bewegungsbahn definiert, und die an dieser befestigte Abdeckkappe nimmt in der Ruheposition der Hub-Spritzdüse stets die definierte, zentrierte Stellung am bzw. im Rahmen ein. Die festgelegte Hubachse dient schließlich der definierten Festlegung des Hubzylinders innerhalb der Karosserie in Verbindung mit dessen rahmenseitiger Fixierung.

Gemäß einer weiteren Ausführung, sind die Halterungsarme im Bereich der Öffnungen in eine Ebene im wesentlichen quer zur Achse der Arretierdorne abgebogen. Die rahmenseitige Fixierung ist durch die Anordnung der Halterungsarme auf den Arretierdornen gegeben.

Der Hohlzylinder ist vorteilhaft im Innern der Karosserie an dessen dem Rahmen abgewandten Endbereich mit Befestigungslaschen befestigt, die mit einer ortsfesten Stützwand verschraubt sind. Zum Ausgleich von Toleranzabweichungen sind dafür den Rand einer Öffnung in der Stützwand einklemmende Klemmuttern eingesetzt, deren Gewindeloch kleiner als die Öffnung ist und die gegenüber der Stützwand im nicht verschraubten Zustand verschiebbar sind.

In einer bevorzugten Ausführung ist die Abdeckkappe mit zwei Haltearmen am Kopf der Hub-Spritzdüse definiert festgelegt, wobei die Haltearme jeweils mit einem Loch am gegenüberliegend am Kopf ausgebildeten oder angeformten Zapfen, vorgespannt am Kopf anliegend, gehalten und jeweils durch einen im Abstand vom Zapfen angeordneten Arretierungsstift in ihrer Stellung zur Hubachse der Hub-Spritzdüse festgelegt sind.

Eine Scheinwerferreinigungsanlage der vorstehend beschriebenen Art wird erfindungsgemäß in der Weise montiert, daß zunächst ein Rahmen zur Anlage der Abdeckkappe in der Öffnung von hinten eingesetzt wird, daß danach der Hubzylinder für die Hub-Spritzdüse mit Fixierungsmitteln am Rahmen axial verschiebbar fixiert, anschließend die Hub-Spritzdüse mit der Abdeckkappe von außen in den Hubzylinder eingesetzt und die Abdeckkappe durch angeordnete Zentrierelemente beim Einschieben des Hubzylinders gegenüber dem Rahmen zentriert werden, und daß danach der Hubzylinder in der dadurch gegebenen Position im Innern der Karosserie befestigt wird. Mit diesem Verfahren gelingt es, eine mit einer Hub-Spritzdüse fest verbundene Abdeckkappe zum Verschließen einer Öffnung in einer karosseriefesten Außenwandung auf einfache Weise gegenüber dieser Öffnung zu zentrieren und einen zwischen der Abdeckkappe und der Außenwandung zwangsläufig entstehenden umlaufenden Spalt allseitig gleichmäßig auszubilden und diesen nach einem Betrieb der Scheinwerferreinigungsanlage ebenso beizubehalten und dadurch in seiner Breite zu minimieren, wodurch das äußere Erscheinungsbild der Anordnung verbessert wird.

Die Erfindung wird nachstehend anhand eines Ausführungsbeispiels erläutert. In der zugehörigen Zeichnung zeigen:
- Fig. 1:: eine perspektivische Darstellung einer Scheinwerferreinigungsanlage,
- Fig. 2:: eine perspektivische Darstellung einer Hubzylinderanordnung in einer modifzierten Ausführung der Scheinwerferreinigungsanlage,
- Fig. 3:: ein Rahmen für die Öffnung in einem Stoßfänger und
- Fig. 4:: die Anordnung der Scheinwerferreinigungsanlage in einer Draufsicht.

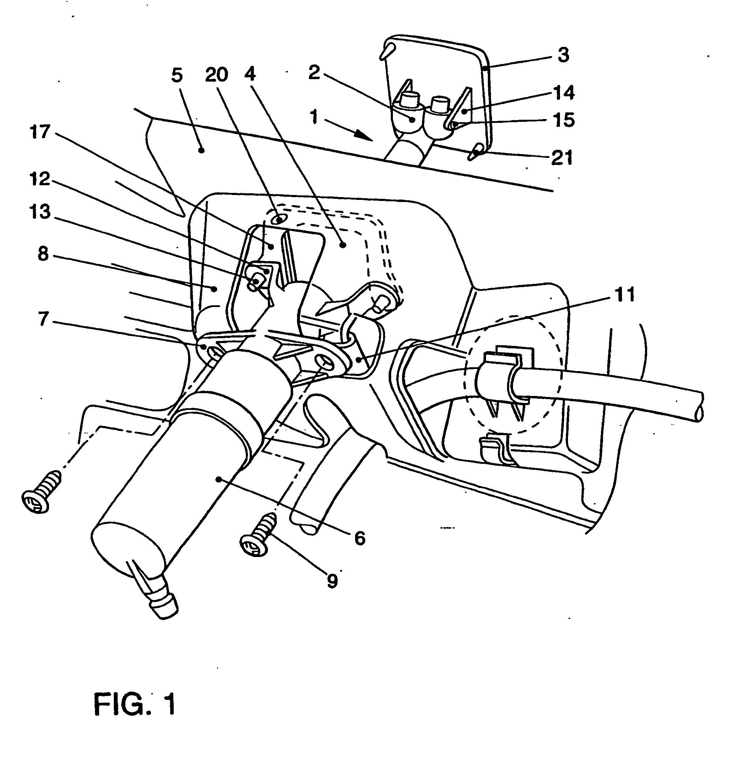

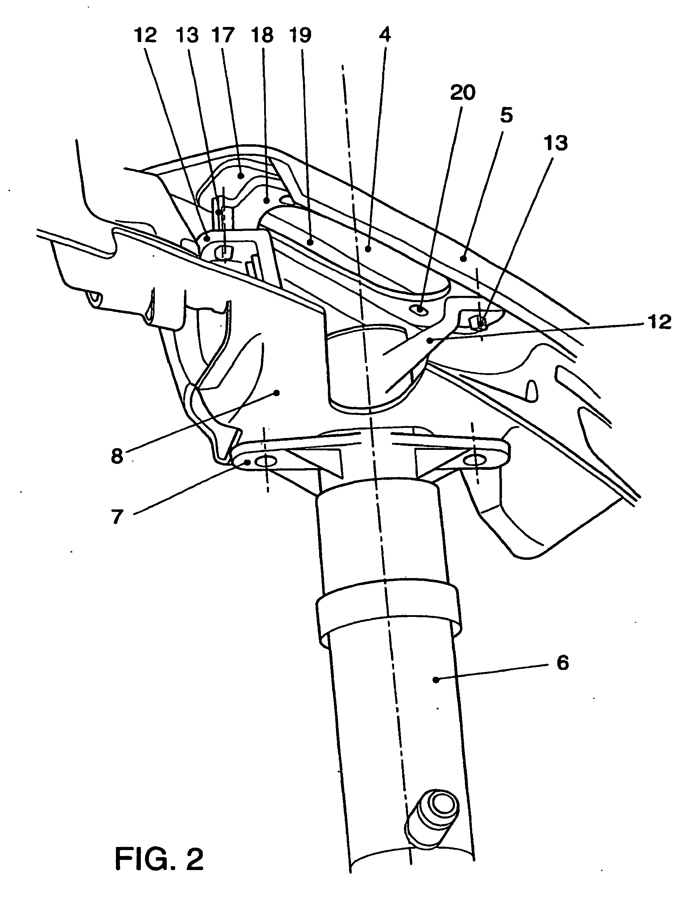

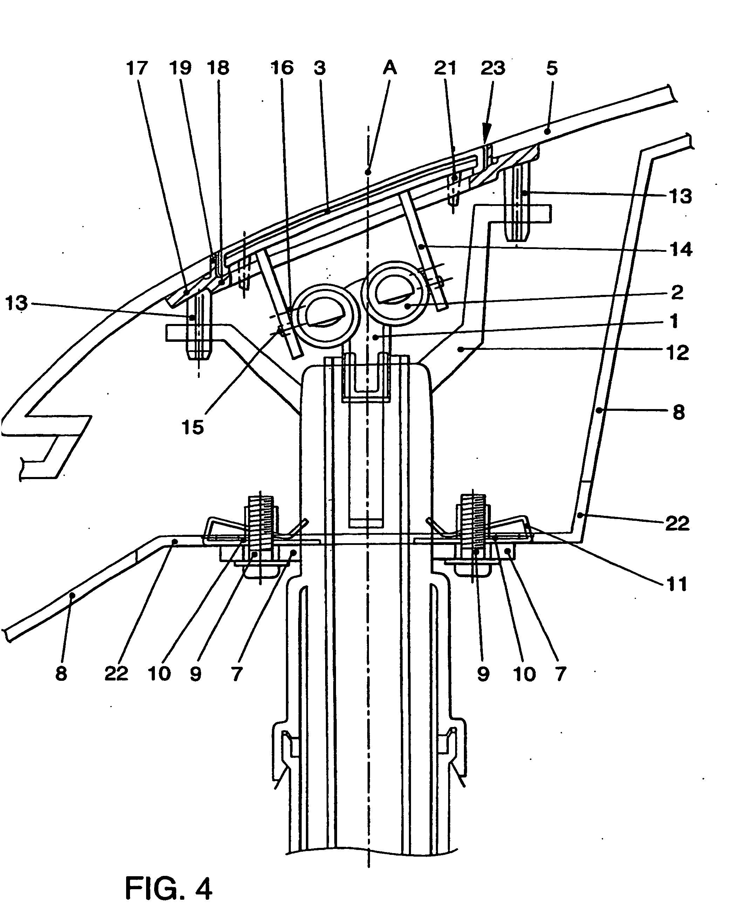

In Fig. 1 ist eine Scheinwerferreinigungsanlage mit einer in der Betriebsposition befindlichen Hub-Spritzdüse 1 mit zwei Düsenkörpern 2 und einer an dieser angeordneten Abdeckkappe 3 für eine Öffnung 4 in einem Stoßfänger 5 dargestellt. Die Hub-Spritzdüse 1 ist in einem Hubzylinder 6 axial verschiebbar angeordnet, der mit zwei Befestigungslaschen 7 an einer ortsfesten Stützwand 8 innerhalb der Fahrzeugkarosserie mit Befestigungsschrauben 9 festgelegt ist. Die Befestigungslaschen 7 sind jeweils an einer den Rand einer Bohrung 10 (Fig. 4) in der Stützwand 8 einklemmenden Klemmutter 11 angeordnet, deren Gewindeloch kleiner als die Bohrung 10 ist. Der Hubzylinder 6 ist öffnungsseitig mit zwei Halterungsarmen 12 an zwei parallel zu dessen Achse ausgerichteten und zu ihrem freien Ende zu verjüngten Arretierdornen 13 axial verschiebbar arretiert, deren Anordnung noch erläutert werden wird (Fig. 2 bis 4). Die Abdeckkappe 3 weist zwei an ihrer Innenseite angeordnete Haltearme 14 mit einem Loch auf, mit denen sie an gegenüberliegend an den Düsenkörpern 2 ausgebildeten Zapfen 15 angeordnet ist, wobei die Haltearme 14 auf die Düsenkörper 2 zu vorgespannt sind und zur Festlegung der Stellung der Abdeckkappe 3 gegenüber der Düsenachse (gleich Hubachse A) jeweils einen Arretierungsstift 16 (Fig. 4) aufweisen, der in eine am jeweiligen Düsenkörper 2 ausgebildete Vertiefung eingreift (nicht dargestellt). In der Öffnung 4 ist ein Rahmen 17 aus Kunststoff (Polypropylen) angeordnet, der der Anlage und Zentrierung der Abdeckkappe 3 in deren Schließstellung bei in der Ruheposition der Hub-Spritzdüse 1 dient, wozu der Rahmen 17 zwei diagonal gegenüberliegend angeordnete Zentrierlöcher 20 für zwei mit diesen korrespondierende Zentrierdorne 21 an der Abdeckkappe 3 aufweist. Die prinzipielle Ausbildung des Rahmens 17 kann aus den weiteren Figuren entnommen werden.

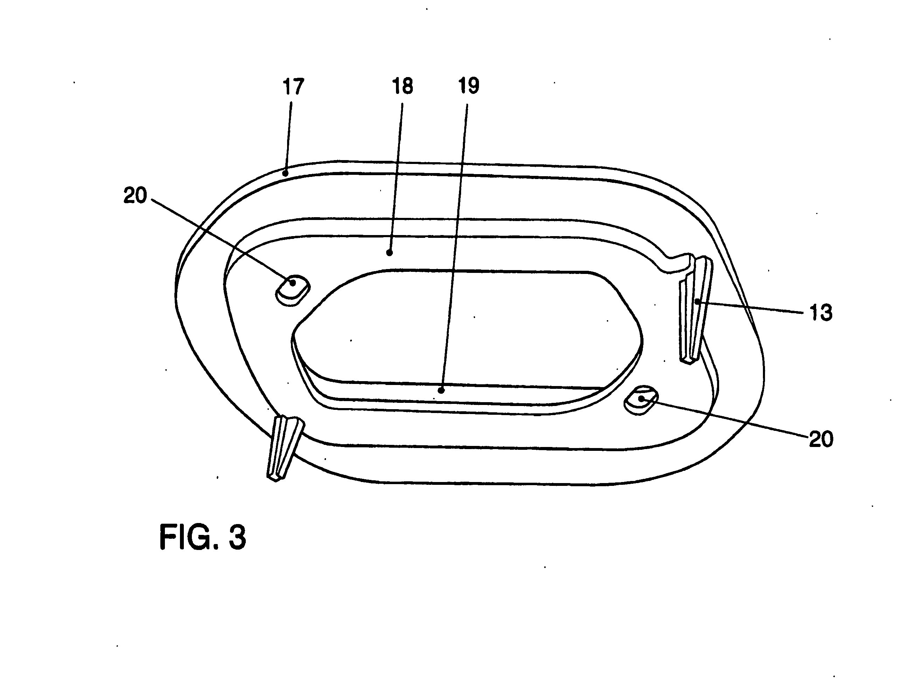

Fig. 2 stellt insbesondere die Anordnung des Hubzylinders 6 am Stoßfänger 5 dar. In der Öffnung 4 am Stoßfänger 5 ist der Rahmen 17 aus Kunststoff (Polypropylen), gegenüber der Ausführung nach Fig. 1 in seiner Form modifiziert, mit einem zum Zentrum derselben gerichteten und gegenüber dem Stoßfänger 5 abgesenkten Anlagerand 18 (auch Fig. 4), an dem die in der Ruheposition befindliche (gegenüber Fig. 1 in ihrer Form modifizierte) Abdeckkappe 3 außenseitig anliegt (nicht dargestellt), und einem in die Öffnung 4 ragenden Anlageflansch 19 für den Rand derselben (4) angeordnet und mit dem ebenfalls aus Polypropylen bestehenden Stoßfänger 5 verschweißt. Am Anlagerand 18 des in Fig. 3 als Einzelheit dargestellten Rahmens 17 sind die beiden Arretierdorne 13 mit einem kreuzförmigen Querschnitt einstückig angeformt und die Zentrierlöcher 20 für die zwei an der Innenseite der Abdeckkappe 3 angeformten und zu ihrem freien Ende zu verjüngten Zentrierdorne 21 (Fig. 4) angeordnet.

In der Darstellung in Fig. 4 mit in der Ruheposition befindlicher Hub-Spritzdüse 1 sind der Rahmen 17 im Querschnitt und die am Anlagerand 18 desselben zentriert angeordnete Abdeckkappe 3 mit den beiden Zentrierdornen 21, die parallel zur Hubachse A der Hub-Spritzdüse 1 ausgerichtet sind, und den an den Düsenkörpern 2 befestigten Haltearmen 14 zu sehen. Der Hubzylinder 6 ist an den am Rahmen 17 angeformten Arretierdornen 13 axial verschiebbar gehaltert und an der Stützwand 8 festgelegt. Die Klemmuttern 11, in diese Position durch eine Ausnehmung 22 in der Stützwand 8 gebracht, liegen im Bereich der jeweiligen Bohrung 10 an der Stützwand 8 beidseitig an und befestigen in Wirkverbindung mit der durch die Bohrung 10 geführten Befestigungsschraube 9 die jeweilige Befestigungslaschen 7 an der Stützwand 8.

Zur Montage der Scheinwerferreinigungsanlage wird zunächst der Rahmen 17 am Rand der Öffnung 4 angeschweißt. Danach wird der Hubzylinder 6 mit seinen Halterungsarmen 12 durch eine Ausnehmung in der Stützwand 8 in Position gebracht und an den Arretierdornen 13 vorfixiert. Anschließend wird die Hub-Spritzdüse 1 mit der an dieser vormontierten Abdeckkappe 3 von der Außenseite des Stoßfängers 5 durch die Öffnung 4 in den Hubzylinder 6 eingeführt und zur Anlage am Anlagerand 18 gebracht, wobei die Zentrierdorne 21 in die Zentrierlöcher 20 eingreifen und die Abdeckkappe 3 im Rahmen 17 zentrieren, wodurch zwischen dieser und dem Anlageflansch 19 eine allseitig gleichmäßig breite Fuge 23 ausgebildet wird. In dieser Position wird der Hubzylinder 6 mittels der Klemmmuttern 11 und den Befestigungsschrauben 9 an der Stützwand 8 angeschraubt.

### BEZUGSZEICHENLISTE

- 1: Hub-Spritzdüse
- 2: Düsenkörper
- 3: Abdeckkappe
- 4: Öffnung
- 5: Stoßfänger
- 6: Hubzylinder
- 7: Befestigungslasche
- 8: Stützwand
- 9: Befestigungsschraube
- 10: Bohrung
- 11: Klemmutter
- 12: Halterungsarm
- 13: Arretierdom
- 14: Haltearm
- 15: Zapfen
- 16: Arretierungsstift
- 17: Rahmen
- 18: Anlagerand
- 19: Anlageflansch
- 20: Zentrierloch
- 21: Zentrieniorn
- 22: Ausnehmung
- 23: Fuge
- A: Hubachse

## Patentansprüche

1. Scheinwerferreinigungsanlage für ein Kraftfahrzeug, mit einer durch eine Öffnung (4) in einer karosseriefesten Außenwandung (5) zwischen einer Ruheposition und einer Betriebsposition verbringbaren Hub-Spritzdüse (1) und einer an dieser angeordneten und die Öffnung (4) in der Ruheposition verschließenden Abdeckkappe (3) und einer um diese ausgebildeten Fuge sowie einem in die Öffnung (4) einsetzbaren Zentriereinsatz und an diesem und der Abdeckkappe (3) angeordneten und miteinander korrespondierenden Zentrierelementen (20,21) zum radialen Zentrieren der Abdeckkappe (3), die beim Festlegen des Hubzylinders (1), der ortsfest innerhalb der Fahrzeugkarosserie (8) festlegbar ist in der Ruheposition miteinander in Eingriff stehen, **dadurch gekennzeichnet, dass** der Zentriereinsatz ein in die Öffnung (4) von hinten einsetzbarer Rahmen (17) mit einem zum Zentrum derselben gerichteten und gegenüber der Außenwandung (5) abgesenkten Anlagerand (18) für die in der Ruheposition befindliche Abdeckkappe (3) ist, dass der Hubzylinder (6) für die Hub-Spritzdüse (1) an dem Rahmen (17) axial verschiebbar gehaltert ist, wozu an der Innenseite des Rahmens (17) zwei im Abstand, vorzugsweise gegenüberliegend, angeordnete, parallel zur Achse des Hubzylinders (6) ausgerichtete und zu ihrem freien Ende zu verjüngte Arretierdorne (13) und am Hubzylinder (6) rahmenseitig zwei Halterungsarme (12) mit Öffnungen für die Arretierdorne (13) ausgebildet sind.

2. Scheinwerferreinigungsanlage nach Anspruch 1, **dadurch gekennzeichnet, dass** als Zentrierelemente wenigstens zwei am Anlagerand (18) im Abstand zueinander, vorzugsweise gegenüberliegend, angeordnete Zentrierlöcher (20) und zwei an der Innenseite der Abdeckappe (3) angeordnete, mit diesen korrespondierende und zu ihrem freien Ende zu verjüngte Zentrierdorne (21) dienen.

3. Scheinwerferreinigungsanlage nach Anspruch 1, **dadurch gekennzeichnet, dass** der Hubzylinder (6) zum Festlegen wenigstens zwei Befestigungslaschen (7) aufweist, über die dieser mit einer ortsfesten Stützwand (8) innerhalb der Fahrzeugkarosserie verschraubbar ist.

4. Scheinwerferreinigungsanlage nach Anspruch 3, **dadurch gekennzeichnet, dass** die Befestigungslaschen (7) jeweils an einer den Rand einer Öffnung (9) in der Stützwand (8) einklemmenden Klemmmutter (11) angeordnet sind, deren Gewindeloch kleiner als die Öffnung (9) ist.

5. Scheinwerferreinigungsanlage nach Anspruch 1, **dadurch gekennzeichnet, dass** die Abdeckkappe (3) mit zwei an deren Innenseite angeordneten Haltearmen (14) am Düsenkörper 2 der Hub-Spritzdüse (1) festgelegt ist.

6. Scheinwerferreinigungsanlage nach Anspruch 5, **dadurch gekennzeichnet, dass** die Haltearme (14) jeweils mit einem Loch an gegenüberliegend am Düsenkörper (2) ausgebildeten Zapfen (15), vorgespannt am Düsenkörper (2) anliegend, angeordnet und jeweils durch einen im Abstand vom Zapfen (15) angeordneten Arretierungsstift (16) in ihrer Stellung zur Düsenachse festgelegt sind.

7. Scheinwerferreinigungsanlage nach Anspruch 1, **dadurch gekennzeichnet, dass** der Rahmen (17) und die karosseriefeste Außenwandung (5) aus Kunststoff bestehen, und der Rahmen (17) an der Außenwandung (5) angeschweißt ist.

8. Verfahren zur Montage einer Scheinwerferreinigungsanlage mit einer eine Öffnung (4) in einer karosseriefesten Außenwandung (5) für eine Hub-Spritzdüse (1) in deren Ruheposition verschließenden und an dieser befestigten Abdeckkappe (3) und einem in die Öffnung (4) einsetzbaren Rahmen (17) für diese sowie mit an diesem und der Abdeckkappe (3) angeordneten und miteinander korrespondierenden Zentrierelementen (20,21) zum radialen Zentrieren der Abdeckkappe (3) beim Einschieben der Hub-Spritzdüse (1) in einen karosseriefest anordbaren Hubzylinder (6) in dem die Hub-Spritzdüse (1) axial verschiebbar gehaltert ist, wobei der Hubzylinder nach dem Zentrieren der Abdeckkappe (3) mit der dann gegebenen Position im Innern der Fahrzeugkarosserie (8) befestigt wird, **dadurch gekennzeichnet, dass** der Rahmen (17) von der Rückseite der Aussenwandung (5) in die Öffnung (4) eingesetzt wird, dass danach der Hubzylinder (6) mit Fixiermitteln (12; 13) am Rahmen (17) axial verschiebbar fixiert wird, und dass anschließend die Hub-Spritzdüse (1) mit der Abdeckkappe (3) von außen in den Hubzylinder (6) eingesetzt wird.

9. Verfahren nach Anspruch 8, **dadurch gekennzeichnet, dass** der Rahmen (17) mit einem zum Zentrum der Öffnung (4) gerichteten und gegenüber der Außenwandung (5) abgesenkten Anlagerand (18) mit Zentrierelementen (20) für die mit Zentrierelementen (21) versehene Abdeckkappe (3) und mit Fixiermitteln (13) für den Hubzylinder (6) versehen ist.

10. Verfahren nach Anspruch 8, **dadurch gekennzeichnet, dass** der am Rahmen (17) arretierte Hubzylinder (6) mit wenigstens zwei Befestigungslaschen (7) mittels Klemmuttern (11) an einer ortsfesten Stützwand (8) im Innern der Karosserie festgeschraubt wird.

## Claims

1. Headlight cleaning system for a motor vehicle, having a lifting spray nozzle (1) which can be moved between a position of rest and an operating position through an opening (4) in an outer wall (5) which is fixed to the vehicle body, and a covering cap (3) which is arranged on the said lifting spray nozzle (1) and closes the opening (4) in the position of rest, and a joint formed around the said covering cap (3), and a centring insert which can be inserted into the opening (4), and centring elements (20, 21) which are arranged on the said centring insert and the covering cap (3) and correspond to one another for radially centring the covering cap (3), which centring elements (20, 21) are in engagement with one another in the position of rest when fixing the lifting cylinder (6) which can be fixed in a stationary manner within the vehicle body (8), **characterized in that** the centring insert is a frame (17) which can be inserted into the opening (4) from behind having a contact edge (18) for the covering cap (3) which is situated in the position of rest, which contact edge (18) is oriented towards the centre of the said opening (4) and is lowered with regard to the outer wall (5), **in that** the lifting cylinder (6) for the lifting spray nozzle (1) is secured on the frame (17) in an axially displaceable manner, for which purpose two locking mandrels (13) and two securing arms (12) with openings for the locking mandrels (13) are formed on the inside of the frame (17), which locking mandrels (13) are arranged at a spacing, preferably lying opposite one another, are aligned parallel to the axis of the lifting cylinder (6) and are tapered towards their free end.

2. Headlight cleaning system according to Claim 1, **characterized in that** at least two centring holes (20), which are arranged on the contact edge (18) at a spacing from one another, preferably lying opposite one another, and two centring mandrels (21), which are arranged on the inside of the covering cap (3), correspond with the said centring holes (20) and are tapered towards their free end, serve as centring elements.

3. Headlight cleaning system according to Claim 1, **characterized in that** the lifting cylinder (6) has at least two fastening lugs (7) for fixing purposes, via which fastening lugs (7) the said lifting cylinder (6) can be screwed to a stationary supporting wall (8) within the vehicle body.

4. Headlight cleaning system according to Claim 3, **characterized in that** the fastening lugs (7) are arranged in each case on a clamping nut (11) which clamps the edge of an opening (9) in the supporting wall (8) and the threaded hole of which is smaller than the opening (9).

5. Headlight cleaning system according to Claim 1, **characterized in that** the covering cap (3) is fixed on the nozzle body (2) of the lifting spray nozzle (1) using two securing arms (14) which are arranged on the inner side of the said covering cap (3).

6. Headlight cleaning system according to Claim 5, **characterized in that** the securing arms (14) are arranged in each case with a hole on journals (15) which are formed on the nozzle body (2) so as to lie opposite, the said securing arms (14) being in contact with the nozzle body (2) in a prestressed manner, and are fixed in their position with respect to the nozzle axis in each case by a locking pin (16) which is arranged at a spacing from the journal (15).

7. Headlight cleaning system according to Claim 1, **characterized in that** the frame (17) and the outer wall (5) which is fixed to the vehicle body are composed of plastic, and the frame (17) is welded to the outer wall (5).

8. Method for mounting a headlight cleaning system having a covering cap (3) which closes an opening (4) in an outer wall (5), which is fixed to the vehicle body, for a lifting spray nozzle (1) in its position of rest and is fastened to the said lifting spray nozzle (1), and having a frame (17) for the said covering cap (3) which can be inserted into the opening (4), and having centring elements (20, 21) which are arranged on the said frame (17) and the covering cap (3) and correspond with one another for the radial centring of the covering cap (3) when the lifting spray nozzle (1) is being slid into a lifting cylinder (6) which can be arranged in a manner which is fixed to the vehicle body and in which lifting cylinder (6) the lifting spray nozzle (1) is secured in an axially displaceable manner, the lifting cylinder being secured in the interior of the vehicle body (8) in the position which is then assumed after the covering cap (3) has been centred, **characterized in that** the frame (17) is inserted into the opening (4) from the rear side of the outer wall (5), **in that** after this the lifting cylinder (16) is fixed to the frame (17) in an axially displaceable manner using fixing means (12; 13), and **in that** subsequently the lifting spray nozzle (1) with the covering cap (3) is inserted into the lifting cylinder (6) from outside.

9. Method according to Claim 8, **characterized in that** the frame (17) is provided with fixing means (13) for the lifting cylinder (6) and with a contact edge (18) having centring elements (20) for the covering cap (3) which is provided with centring elements (21), which contact edge (18) is oriented towards the centre of the opening (4) and is lowered compared with the outer wall (5).

10. Method according to Claim 8, **characterized in that** the lifting cylinder (6) which is locked on the frame (17) is screwed to a stationary supporting wall (8) in the interior of the vehicle body by means of clamping nuts (11) using at least two fastening lugs (7).

## Revendications

1. Dispositif de nettoyage de phares pour un véhicule automobile, comprenant un gicleur déplaçable (1) pouvant être amené par une ouverture (4) d'une paroi extérieure (5) fixée à la carrosserie entre une position de repos et une position de fonctionnement, et un volet de recouvrement (3) disposé sur celui-ci et fermant l'ouverture (4) dans la position de repos et un joint réalisé autour de celui-ci ainsi qu'un insert de centrage pouvant être inséré dans l'ouverture (4) et des éléments de centrage (20, 21) disposés sur celui-ci et sur le volet de recouvrement (3) et se correspondant mutuellement, pour le centrage radial du volet de recouvrement (3), lesquels sont en prise les uns avec les autres dans la position de repos lors de la fixation du vérin de levage (6), qui peut être fixé fixement à l'intérieur de la carrosserie du véhicule (8), **caractérisé en ce que** l'insert de centrage est un cadre (17) pouvant être inséré par l'arrière dans l'ouverture (4), avec un bord d'appui (18) orienté vers son centre et renfoncé par rapport à la paroi extérieure (5), pour le volet de recouvrement (3) se trouvant dans la position de repos, **en ce que** le vérin de levage (6) pour le gicleur déplaçable (1) est maintenu sur le cadre (17) de manière déplaçable axialement, ce pourquoi, du côté interne du cadre (17), deux goujons de blocage (13) sont réalisés, espacés l'un de l'autre, de préférence en face l'un de l'autre, orientés parallèlement à l'axe du vérin de levage (6) et se rétrécissant vers leur extrémité libre, et sur le vérin de levage (6), du côté du cadre, deux bras de fixation (12) sont réalisés avec des ouvertures pour les goujons de blocage (13).

2. Dispositif de nettoyage de phares selon la revendication 1, **caractérisé en ce que** l'on utilise en tant qu'éléments de centrage au moins deux trous de centrage (20) disposés sur le bord d'appui (18) espacés l'un de l'autre et de préférence en face l'un de l'autre et deux goujons de centrage (21) disposés du côté interne du volet de recouvrement (3), correspondant avec ceux-ci et se rétrécissant vers leur extrémité libre.

3. Dispositif de nettoyage de phares selon la revendication 1, **caractérisé en ce que** le vérin de levage (6) présente pour la fixation au moins deux pattes de fixation (7) par le biais desquelles il peut être vissé à une paroi de support fixe (8) à l'intérieur de la carrosserie du véhicule.

4. Dispositif de nettoyage de phares selon la revendication 3, **caractérisé en ce que** les pattes de fixation (7) sont disposées respectivement sur un écrou de serrage (11) serrant le bord d'une ouverture (9) dans la paroi de support (8), dont le trou fileté est inférieur à l'ouverture (9).

5. Dispositif de nettoyage de phares selon la revendication 1, **caractérisé en ce que** le volet de recouvrement (3) est fixé au corps de gicleur (2) du gicleur déplaçable (1) avec deux bras de fixation (14) disposés sur son côté interne.

6. Dispositif de nettoyage de phares selon la revendication 5, **caractérisé en ce que** les bras de fixation (14) sont disposés en applique précontrainte contre le corps de gicleur (2) à chaque fois avec un trou en face d'un tourillon (15) réalisé sur le corps de gicleur (2), et sont fixés à chaque fois dans leur position par rapport à l'axe du gicleur par une tige de blocage (16) disposée à distance du tourillon (15).

7. Dispositif de nettoyage de phares selon la revendication 1, **caractérisé en ce que** le cadre (17) et la paroi extérieure (5) fixée à la carrosserie se composent de plastique, et **en ce que** le cadre (17) est soudé à la paroi extérieure (5) .

8. Procédé de montage d'un dispositif de nettoyage de phares comprenant un volet de recouvrement (3) fermant, dans sa position de repos, une ouverture (4) dans une paroi extérieure (5) fixée à la carrosserie pour un gicleur déplaçable (1) et fixé à celle-ci et un cadre (17) pouvant être inséré dans l'ouverture (4) pour celle-ci et comprenant des éléments de centrage (20, 21) disposés sur celui-ci et sur le volet de recouvrement (3) et se correspondant mutuellement, pour le centrage radial du volet de recouvrement (3) lors de l'enfoncement du gicleur déplaçable (1) dans un vérin de levage (6) pouvant être disposé fixement sur la carrosserie, dans lequel le gicleur déplaçable (1) est maintenu de manière à pouvoir coulisser axialement, le vérin de levage étant fixé après le centrage du volet de recouvrement (3) avec la position ainsi fixée à l'intérieur de la carrosserie du véhicule (8), **caractérisé en ce que** le cadre (17) est inséré par le côté arrière de la paroi extérieure (5) dans l'ouverture (4), **en ce qu'**ensuite le vérin de levage (6) est fixé avec des moyens de fixation (12 ; 13) de manière à pouvoir coulisser axialement sur le cadre (17), et **en ce qu'**ensuite le gicleur déplaçable (1) est inséré avec le volet de recouvrement (3) depuis l'extérieur dans le vérin de levage (6).

9. Procédé selon la revendication 8, **caractérisé en ce que** le cadre (17) est pourvu d'un bord d'appui (18) orienté vers le centre de l'ouverture (4) et renfoncé par rapport à la paroi extérieure (5), avec des éléments de centrage (20) pour le volet de recouvrement (3) pourvu d'éléments de centrage (21), et de moyens de fixation (13) pour le vérin de levage (6).

10. Procédé selon la revendication 8, **caractérisé en ce que** le vérin de levage (6) bloqué sur le cadre (17) est vissé fixement avec au moins deux pattes de fixation (7) à une paroi de support fixe (8) à l'intérieur de la carrosserie au moyen d'écrous de serrage (11).
